# EUROPEAN PATENT APPLICATION

(11) **EP 4 811 646 A1**
(43) Date of publication of application: **23.09.2026**
(21) Application number: 24891358.4
(22) Date of filing: 11.11.2024
(51) Int. Cl.: H02P 23/04, H02M 7/48

(54) **COMPRESSOR DRIVING DEVICE**

(30) Priority: 13.11.2023 JP 2023192979
(71) Applicant: Panasonic Corporation, Osaka 571-8501 (JP)
(72) Inventor: NISHIMURA, Seiichi, Kadoma-shi, Osaka 571-8501 (JP); FUKUDA, Mitsuhiro, Kadoma-shi, Osaka 571-8501 (JP)
(74) Representative: Eisenführ Speiser
(86) International application number: PCT/JP2024/039917
(87) International publication number: WO 2025/105322

(57) **Abstract**

A compressor driving device includes: an inverter including an inverter circuit that converts a direct current into an alternating current and a controller; and a compressor including an electric motor connected to the inverter circuit and a piston moved within a cylinder in a reciprocating manner by the electric motor. The controller includes: a multi-phase PWM signal generator configured to set a plurality of carrier frequencies for driving the compressor; and a bottom dead center detector configured to detect a bottom dead center of the piston in the compressor. In a case where the controller switches a carrier frequency from a high frequency to a low frequency while the compressor is rotating, a timing to switch the carrier frequency is the bottom dead center of the compressor. This makes it possible to favorably suppress the generation of an excessive electric current when switching the carrier frequency.

## Description

### Technical Field

The present disclosure relates to a compressor driving device for use in various refrigerator-freezer equipment.

### Background Art

Patent Literature 1 discloses an inverter controller that enables startup even when a startup load is relatively large. The inverter controller is configured to set the carrier frequency of a PWM signal during a startup control period, i.e., a period from a start point of startup of a motor until a predetermined time has elapsed, to be higher than the carrier frequency in a steady control state after the elapse of the startup control period.

### Citation List

### Patent Literature

PTL 1: Japanese Laid-Open Patent Application Publication No. 2005-168196

### Summary of Invention

### Technical Problem

As a result of diligent studies, the inventors of the present invention have found that since a switching point for switching the carrier frequency from a high frequency to a low frequency while a compressor is being driven is determined based on time, if the switching occurs at a position, for example, near the top dead center where a load torque variation is large, an excessive electric current may be generated, which may cause, for example, vibration and noise in the compressor.

The present disclosure has been made to solve the above-described problems, and an object of the present disclosure is to provide a compressor driving device capable of favorably suppressing the generation of an excessive electric current when switching a carrier frequency.

### Solution to Problem

In order to solve the above-described problems, a compressor driving device according to the present disclosure includes: an inverter including an inverter circuit that converts a direct current into an alternating current and a controller; and a compressor including an electric motor connected to the inverter circuit and a piston moved within a cylinder in a reciprocating manner by the electric motor. The controller includes: a multi-phase PWM signal generator configured to set a plurality of carrier frequencies for driving the compressor; and a bottom dead center detector configured to detect a bottom dead center of the piston in the compressor. In a case where the controller switches a carrier frequency from a high frequency to a low frequency while the compressor is rotating, a timing to switch the carrier frequency is the bottom dead center of the compressor.

According to the above configuration, in the case of controlling a plurality of carrier frequencies for driving the compressor, the carrier frequency can be switched from a high frequency to a low frequency at a timing at which a load torque variation is small. Accordingly, the carrier frequency can be smoothly switched without impairing controllability, which makes it possible to suppress the generation of an excessive electric current when switching the carrier frequency.

The above and other objects, features, and advantages of the present invention will more fully be apparent from the following detailed description of a preferred embodiment with reference to accompanying drawings.

### Advantageous Effects of Invention

The present disclosure configured as described above has an advantage of being able to provide a compressor driving device capable of favorably suppressing the generation of an excessive electric current when switching a carrier frequency.

### Brief Description of Drawings

FIG. 1 is a block diagram showing a representative configuration example of a compressor driving device according to an embodiment of the present disclosure.
FIG. 2 schematically shows a rotational position of a compressor driven by the compressor driving device of FIG. 1.
FIG. 3 is a flowchart showing one example of control by the compressor driving device of FIG. 1.
FIG. 4 is a timing chart showing one example of switching of a carrier frequency in the compressor driving device of FIG. 1.
FIG. 5 is a timing chart showing one example of switching of a carrier frequency in a compressor driving device according to a conventional embodiment.

### Description of Embodiments

### (Findings and so forth on which the present disclosure is based)

At the time the present inventors arrived at the subject matter of the present disclosure, it was known, from the viewpoint of reducing power loss in an inverter circuit, that when driving a compressor, a lower carrier frequency of a PWM signal for driving the compressor provides a greater effect of reducing power loss in the inverter circuit. It was also known, from the viewpoint of performing control correction highly frequently to ensure control stability, that, during startup acceleration of the compressor, a higher carrier frequency of the PWM signal makes it possible to readily ensure control stability.

Generally speaking, a sampling interval for acquiring a driving state for controlling a compressor is synchronized with the carrier frequency of a PWM signal. Therefore, while driving the compressor, when switching the carrier frequency from a high frequency to a low frequency, the sampling interval that has been short becomes longer, resulting in a delayed correction.

If the switching is performed, for example, near the top dead center where a load torque variation is large, sufficient feedback control with respect to the load variation cannot be performed due to the delayed correction, resulting in failing to follow required driving conditions. In particular, if the torque falls short of a required torque, an excessive electric current proportional to the shortage is generated, causing vibration, noise, and the like in the compressor.

The present inventors independently identified these problems, and arrived at the subject matter of the present disclosure in order to solve the problems. Specifically, a compressor driving device according to the present disclosure makes it possible to suppress the generation of an excessive electric current when switching a carrier frequency from a high frequency to a low frequency, while achieving both control stability during startup acceleration, such as at compressor startup, and reduction of power loss during steady-state driving.

Hereinafter, embodiments are described with reference to the drawings. In the embodiments described below, a description that is more detailed than necessary is omitted in some cases. For example, detailed descriptions of well-known matters or redundant descriptions of substantially identical components are omitted in some cases. These omissions are made to avoid unnecessary redundancy in the description below and to allow those skilled in the art to readily understand the embodiments. In the drawings, the same or corresponding elements are denoted by the same reference signs, and repeating the same descriptions is avoided below.

It should be noted that the accompanying drawings and the description below are provided to allow those skilled in the art to understand the present disclosure sufficiently, and the accompanying drawings and the description below are not intended to limit subject matters described in the claims.

### [1. Configuration Example of Compressor Driving Device]

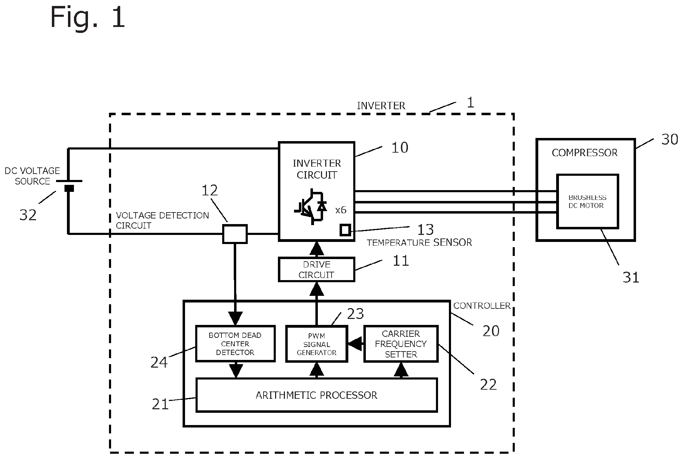

A representative configuration example of a compressor driving device according to the present disclosure is described with reference to FIG. 1. For example, as shown in FIG. 1, the compressor driving device according to the present embodiment includes an inverter 1 and a compressor 30. In the present embodiment, the inverter 1 includes an inverter circuit 10, a drive circuit 11, a current detection circuit 12, and a controller 20. In the present embodiment, the controller 20 includes an arithmetic processor 21, a carrier frequency setter 22, a PWM signal generator 23, and a bottom dead center detector 24.

The inverter circuit 10 outputs a signal to drive a brushless DC motor 31 included in the compressor 30. The inverter circuit 10 is a circuit that includes drive elements, such as an IGBT (Insulated Gate Bipolar Transistor) or an FET (Field Effect Transistor). In the present embodiment, as schematically shown in FIG. 1, the inverter circuit 10 includes a temperature sensor 13, such as an NTC (Negative Temperature Coefficient) thermistor.

The drive circuit 11 converts a signal outputted from the controller 20 into a signal suitable for the inverter circuit 10. It should be noted that the drive circuit 11 may include a built-in protection circuit, such as one for overcurrent protection. The current detection circuit 12 periodically obtains an electric current value (circuit current) from the inverter circuit 10, and outputs the obtained electric current value to the bottom dead center detector 24 of the controller 20.

The controller 20 controls the driving of the compressor 30 via the inverter circuit 10. The controller 20 may also be configured to perform various types of control, other than the control of driving of the compressor 30, in accordance with a specific configuration of the compressor driving device.

The arithmetic processor 21 performs various arithmetic processing associated with control performed by the controller 20. Specific examples of the arithmetic processing include, as described below, calculation of a voltage command value to drive the compressor 30.

The carrier frequency setter 22 sets a plurality of carrier frequencies for driving the compressor 30. The PWM signal generator 23 converts the voltage command value calculated by the arithmetic processor 21 into a PWM signal. The bottom dead center detector 24 estimates the rotational phase of the brushless DC motor 31 based on the circuit current detected by the current detection circuit 12, and estimates the position of the bottom dead center.

In the description herein, the specific configuration of the controller 20, and the configurations of components included in the controller 20, such as the arithmetic processor 21, the carrier frequency setter 22, the PWM signal generator 23, and the bottom dead center detector 24, are not particularly limited. For example, the controller 20 described in the present embodiment may be realized by, e.g., an arithmetic processing device and a storage device of a microcomputer or microcontroller.

The storage device included in the controller 20 may be configured as an internal memory of a microcomputer or microcontroller, or may be configured as an independent memory or storage. The storage device need not be a single device, and may be configured as a plurality of storage devices (e.g., as an internal memory and an external hard disk drive or SSD (Solid State Drive)).

The arithmetic processing device included in the controller 20 may include one of or a combination of two or more of, for example, a general-purpose processor, a dedicated processor, an integrated circuit, an FPGA (Field Programmable Gate Array), an ASIC (Application Specific Integrated Circuit), and a GPU. The arithmetic processing device included in the controller 20 may be configured to operate, in accordance with a program stored in the storage device, to realize functions of the controller 20.

Since a processor serving as the arithmetic processing device includes circuits formed by a large number of transistors, memories, and so forth, the processor is a hardware circuit (or a processing circuit). Similarly, an integrated circuit or an ASIC includes, for example, a processor such as a CPU or a processing block, and is therefore a hardware circuit. An FPGA includes a large number of integrated logic circuits (functional blocks), and is therefore a hardware circuit. A GPU includes a large number of arithmetic circuits (cores) arranged in parallel, and is therefore a hardware circuit. Software such as a program stored in the storage device is used to configure hardware circuits (such as a processor, an integrated circuit, an FPGA, an ASIC, and a GPU). Alternatively, the arithmetic processing device may be configured as, for example, a logic circuit including known switching elements, subtractors, comparators, and so forth.

Also, specific configurations of the inverter circuit 10, the drive circuit 11, the current detection circuit 12, and the like described in the present embodiment are not particularly limited, and known configurations may be suitably used. For example, as described above, the inverter circuit 10 may be a circuit including, for example, an IGBT or an FET as a switching element (drive element).

The inverter 1 configured as described above is connected to the compressor 30 by multi-phase connection lines. The inverter 1 is supplied with a voltage from a DC voltage source 32. The compressor 30 includes the brushless DC motor 31. The brushless DC motor 31 is driven by a voltage signal outputted from the inverter circuit 10 of the inverter 1. Examples of a specific driving method include two-phase modulation control and three-phase modulation control in which control is performed by sinusoidal current application, and rectangular wave control in which control is performed by rectangular wave current application.

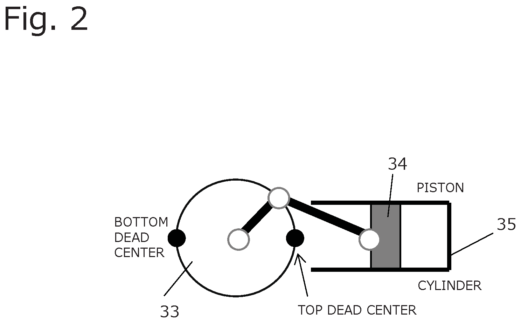

Next, essential components of the compressor 30 are described with reference to FIG. 2. As schematically shown in FIG. 2, the brushless DC motor 31 is provided with a crank mechanism 33, and a piston 34 is connected to the crank mechanism 33. The piston 34 moves within a cylinder 35 in a reciprocating manner. A space within the cylinder 35 that is partitioned by the piston 34 serves as a compression chamber.

The specific configuration of the compressor 30 is not particularly limited, and may include an electric motor such as the brushless DC motor 31, the piston 34, and the cylinder 35. A typical configuration example of the compressor 30 is, for example, one in which the compressor 30 includes, as the crank mechanism 33, a crankshaft including a main shaft and an eccentric shaft, the main shaft being fixed to the brushless DC motor 31, the eccentric shaft being connected to the piston 34 by, for example, coupling means (e.g., a connecting rod).

When the crankshaft rotates as a result of rotation of the brushless DC motor 31, the piston 34 connected to the eccentric shaft moves within the cylinder 35 in a reciprocating manner. It should be noted that, in FIG. 2, in the crank mechanism 33 schematically illustrated therein, rotational phases of the top dead center and the bottom dead center of the piston 34 are indicated by black-filled circles.

### [2. Operation Examples of Compressor Driving Device]

Hereinafter, operations of the compressor driving device configured as described above are described.

### [2-1. Operation 1 during Startup of Compressor (immediately after the beginning of startup)]

Hereinafter, basic operations of the inverter 1 are described with reference to FIG. 1. During startup acceleration of the brushless DC motor 31, the arithmetic processor 21 in the controller 20 calculates a suitable voltage command value for startup.

Assume a case where the pressure state of the compressor 30 is a balanced state. In this case, no preliminary operation or the like is performed before startup. Therefore, in a low-speed rotational region at the beginning of startup, sufficient back electromotive force information from the brushless DC motor 31 cannot be obtained. Accordingly, it is difficult to estimate the rotor position of the brushless DC motor 31. Therefore, immediately after the beginning of startup, forced commutation driving without rotor position estimation is performed.

On the other hand, for example, in a system in which the compressor 30 is incorporated, for example, in a case where a pressure immediately before stopping is maintained to reduce power loss, the pressure state of the compressor 30 during startup becomes an unbalanced state. As a result, startup involving forced commutation driving may become difficult.

As countermeasures for this, there are methods such as a method of pre-calculating a rotor position by a preliminary operation such as a reverse operation before startup, and a method of implementing, prior to this process, control to stop the rotation of the rotor at a position away from the top dead center where a large load torque is required.

After startup, the voltage command value calculated by the arithmetic processor 21 is converted into a PWM signal by the PWM signal generator 23. The carrier frequency at the time is a frequency set by the carrier frequency setter 22. The frequency is determined based on a setting from the arithmetic processor 21.

To generate a PWM signal, it is necessary to periodically obtain an electric current value from the compressor 30 by the current detection circuit 12. A sampling interval for obtaining the electric current value is synchronized with the carrier frequency, and based on a sampled value, a next voltage command value is calculated by the arithmetic processor 21 and converted into a PWM signal by the PWM signal generator 23.

During startup, as the compressor 30 is accelerated from a stopped state to a predetermined rotation speed, the pressure state of the compressor 30 also varies. Therefore, control using a short sampling interval is required. Accordingly, a sampling interval that makes it possible for control to sufficiently follow not only speed variations due to acceleration but also load variations due to pressure variations is required. For this reason, in the description herein, the carrier frequency is set to, for example, 6kHz or higher.

As described above, a signal for driving the brushless DC motor 31 is outputted from the inverter circuit 10. As previously described, a typical method of driving the brushless DC motor 31 is, for example, sinusoidal control (two-phase modulation control or three-phase modulation control) or rectangular wave control. In such control, a control voltage mainly used in the inverter circuit 10 is not 3.3 V or 5 V used in the controller 20, but 15 V. In addition, in order to drive a high-side element, voltage conversion using a bootstrap circuit or the like is required. Accordingly, the drive circuit 11 is provided between the controller 20 and the inverter circuit 10, and signal conversion is performed by the drive circuit 11.

### [2-2. Operation 2 during Startup of Compressor (during acceleration)]

When the brushless DC motor 31 starts rotating, back electromotive force is generated due to the rotation. Based on the back electromotive force, the controller 20 estimates the rotor position of the brushless DC motor 31, and the controller 20 further outputs a voltage command value corresponding to the estimated rotor position.

Specifically, based on a circuit current value of the inverter circuit 10, which is obtained by the current detection circuit 12, the arithmetic processor 21 of the controller 20 performs rotor position estimation calculation. Thereafter, the arithmetic processor 21 continuously calculates an appropriate voltage command value in accordance with a rotational phase obtained by the rotor position estimation calculation. Accordingly, the arithmetic processor 21 (the controller 20) continuously outputs the voltage command value. As a result, the brushless DC motor 31 continues rotating.

### [2-3. Compressor Operation to Transition to Steady-State Driving]

When the rotation speed of the brushless DC motor 31 reaches a target value and becomes stable, the controller 20 starts changing the carrier frequency. Hereinafter, the steps thereof are described.

The bottom dead center detector 24 included in the controller 20 estimates the rotational phase of the brushless DC motor 31 based on the circuit current of the inverter circuit 10 detected by the current detection circuit 12, and estimates the position of the bottom dead center of the piston 34. In the control of the compressor 30, direct detection of the bottom dead center or estimation of a point at which a load torque variation is small is difficult. However, as shown in FIG. 2, the bottom dead center of the piston 34 is mechanically positioned opposite to the top dead center. At the top dead center of the piston 34, a load torque variation is large.

Accordingly, in the present embodiment, the bottom dead center detector 24 detects the top dead center of the piston 34, and indirectly estimates the top dead center + a mechanical angle of 180° as the bottom dead center of the piston 34. That is, in the present embodiment, in the control performed by the controller 20, estimation of the position of the bottom dead center of the piston 34 is regarded as being substantially equivalent to direct detection of the bottom dead center.

The position of the bottom dead center of the piston 34, which is detected (estimated) by the bottom dead center detector 24, is outputted to the arithmetic processor 21. The arithmetic processor 21 outputs a command to the carrier frequency setter 22 to switch the carrier frequency at the estimated position of the bottom dead center. At the time, the carrier frequency is set to a value lower than the carrier frequency during startup, for example, set to 1.5 kHz. The carrier frequency setter 22 receives the command to switch the carrier frequency. Based on the received command, the carrier frequency setter 22 switches the carrier frequency, and transmits a command to the PWM signal generator 23.

The PWM signal generator 23 converts the voltage command value outputted by the arithmetic processor 21 into a PWM signal at the switched carrier frequency. The drive circuit 11 converts the PWM signal into a signal suitable for input to the inverter circuit 10. Then, the inverter circuit 10 outputs a voltage signal at the set carrier frequency to drive the brushless DC motor 31.

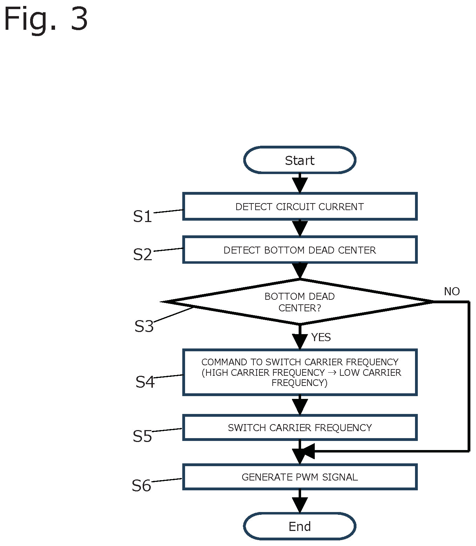

Such a change in the carrier frequency is performed as control by the controller 20. One example of this control by the controller 20 is hereinafter described with reference to the block diagram shown in FIG. 1 and a flowchart shown in FIG. 3.

First, the controller 20 detects the circuit current of the inverter circuit 10 by the current detection circuit 12 (step S1). Next, the bottom dead center detector 24 of the controller 20 detects (estimates) the position of the bottom dead center of the piston 34 based on the circuit current obtained from the current detection (step S2). The bottom dead center detector 24 determines based on the circuit current whether or not the piston 34 is positioned at the bottom dead center (step S3).

If the bottom dead center detector 24 has detected that the piston 34 is positioned at the bottom dead center (YES in step S3), the arithmetic processor 21 of the controller 20 outputs, to the carrier frequency setter 22 of the controller 20, a command to switch the carrier frequency from a high carrier frequency to a low carrier frequency, i.e., a switching command from a high carrier frequency to a low carrier frequency (step S4). Upon receiving the command, the carrier frequency setter 22 switches the high carrier frequency to the low carrier frequency (step S5).

At the low carrier frequency switched by the carrier frequency setter 22, the PWM signal generator 23 of the controller 20 generates a PWM signal from the voltage command value outputted by the arithmetic processor 21 (step S6). On the other hand, if the bottom dead center detector 24 does not detect that the piston 34 is positioned at the bottom dead center (No in step S3), the PWM signal generator 23 generates, at the unswitched high carrier frequency, a PWM signal from the voltage command value outputted by the arithmetic processor 21 (step S6).

As shown in FIG. 1, the controller 20 inputs the PWM signal generated by the PWM signal generator 23 to the inverter circuit 10 via the drive circuit 11. Accordingly, the inverter circuit 10 drives the brushless DC motor 31 by using a voltage signal at the switched low carrier frequency or a voltage signal at the unswitched high carrier frequency.

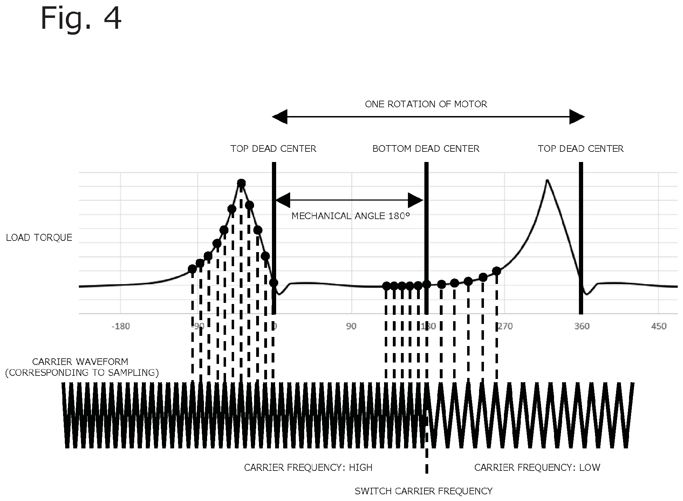

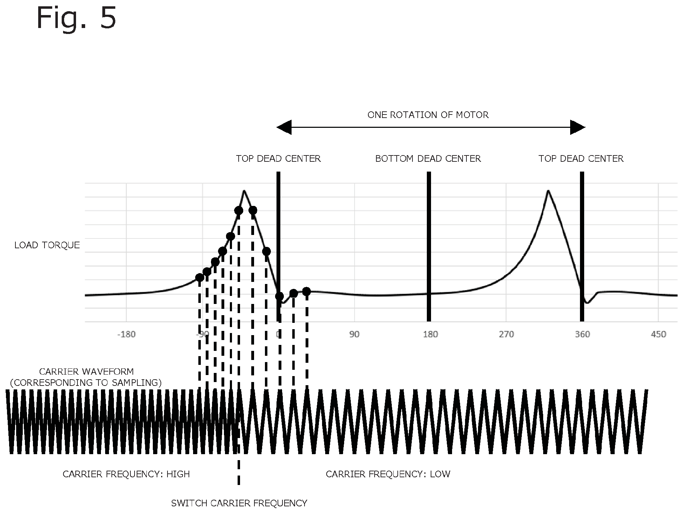

Hereinafter, the timing to switch the carrier frequency is described with reference to FIG. 4 and FIG. 5. The upper part of FIG. 4 or FIG. 5 shows changes in the load torque of the brushless DC motor 31 (the compressor 30). The vertical axis represents the magnitude of the load torque, and the horizontal axis represents the rotational phase of the rotor of the brushless DC motor 31. Black dots on the graph showing the changes in the load torque represent sampling points at which sampling is performed for control by the controller 20. The lower part of FIG. 4 or FIG. 5 shows a carrier waveform corresponding to the changes in the load torque of the brushless DC motor 31. FIG. 4 corresponds to the compressor driving device according to the embodiment of the present disclosure, whereas FIG. 5 corresponds to a compressor driving device according to a conventional embodiment.

As shown in FIG. 4, as the rotational phase of the rotor approaches the top dead center of the piston 34, the load torque gradually increases, then reaches the maximum value, and thereafter gradually decreases. When the top dead center is reached, the load torque is sufficiently low. Shortly after passing the top dead center, the load torque reaches the minimum value, and then temporarily increases. Thereafter, a stable state in which the variation range of the load torque is small continues. The stable state continues until the bottom dead center of the piston 34 is reached. When the bottom dead center is passed, the load torque gradually increases.

As described above, in the region near the bottom dead center of the piston 34, the variation range of the load torque of the brushless DC motor 31 is smaller than in the region near the top dead center. That is, the region near the bottom dead center is a stable region. Accordingly, as shown in FIG. 4, in the region near the bottom dead center, even when the carrier frequency is switched from a high carrier frequency to a low carrier frequency and the sampling interval becomes longer, influences of load torque variations when the sampling interval becomes longer are smaller than in the region near the top dead center.

Incidentally, in the conventional embodiment shown in FIG. 5, since the timing to switch the carrier frequency is not specified, there is a case where the carrier frequency is switched in a region near the top dead center, i.e., in a region where the load torque varies greatly. In this case, since a portion in which the sampling interval becomes longer overlaps the region where the load torque varies greatly, the control may become unstable. The compressor driving device according to the present embodiment makes it possible to avoid such an unstable condition shown in FIG. 5.

### [3 Advantageous Effects, etc.]

As described above, the compressor driving device according to the present embodiment includes the inverter 1 and the compressor 30. The inverter 1 includes the inverter circuit 10, the drive circuit 11, the current detection circuit 12, and the controller 20. The controller 20 includes the arithmetic processor 21, the carrier frequency setter 22, the PWM signal generator 23, and the bottom dead center detector 24. The compressor 30 includes the brushless DC motor 31. The inverter 1 is connected to the compressor 30 by multi-phase connection lines. The DC voltage source 32 supplies a voltage to the inverter 1. According to this configuration, in a case where the carrier frequency is switched from a high frequency to a low frequency while the brushless DC motor 31 is rotating, the timing to switch the carrier frequency is the bottom dead center of the compressor 30.

Accordingly, the carrier frequency can be switched at a timing at which the load torque of the brushless DC motor 31 is stable. This makes is possible to favorably suppress the generation of an excessive electric current, or the generation of vibration in the compressor 30, due to switching of the carrier frequency.

Further, in the compressor driving device according to the present embodiment, as described in the present embodiment, the carrier frequency is set high during startup acceleration of the brushless DC motor 31, and after the compressor 30 has transitioned to steady-state rotation, the carrier frequency may be set to be lower than the carrier frequency during startup acceleration. In other words, in the compressor driving device, the controller 20 may be configured to set the carrier frequency during startup acceleration of the compressor 30 to be higher than the carrier frequency during steady-state rotation after the acceleration has ended.

During startup acceleration of the compressor 30, it is difficult to establish regular control behavior due to, for example, pressure conditions or load variation factors. In this respect, in the compressor driving device according to the present embodiment, the carrier frequency during startup acceleration is set high as described above. Accordingly, even in a state where regular control behavior is difficult to establish, highly frequent sampling corresponding to the high carrier frequency can be performed, which makes it possible to achieve highly reliable startup even during startup acceleration of the compressor 30.

In addition, in the above-described configuration, during steady-state rotation of the compressor 30, the carrier frequency is set to be lower than that during startup acceleration. Accordingly, since the carrier frequency is switched from a high carrier frequency to a low carrier frequency at the bottom dead center of the compressor 30, switching of the carrier frequency can be performed while favorably suppressing the generation of an excessive electric current, or the generation of vibration in the compressor 30. This makes it possible to achieve both highly reliable startup performance and reduction of power loss during steady-state rotation.

Further, in the compressor driving device according to the present embodiment, when the rotation speed of an electric motor such as the brushless DC motor 31 becomes a predetermined rotation speed (rotation speed threshold) or higher, or when an input power value to the inverter 1 becomes a predetermined value (input power threshold) or higher, the controller 20 may set the carrier frequency to be higher than the carrier frequency during steady-state rotation.

As described above, in the compressor driving device according to the present embodiment, the controller 20 may be configured to perform, after startup of the compressor 30, rotation speed control of the compressor 30 by switching the carrier frequency between at least two carrier frequencies. In the above-described configuration example, when the carrier frequency during steady-state rotation is defined as a first carrier frequency, the carrier frequency when the rotation speed of the electric motor becomes the rotation speed threshold or higher, or the carrier frequency when the input power value to the inverter 1 becomes the input power threshold or higher, may be defined as a second carrier frequency. In addition, in accordance with the setting of the rotation speed threshold or the input power threshold, three or more carrier frequencies including a third carrier frequency may be set in advance.

In a configuration in which the carrier frequency is switched between two or more carrier frequencies, the controller 20 may be configured to determine, based on at least one of an actual rotation speed of the compressor 30 (the electric motor) or input power to the inverter 1, to which one of the two or more carrier frequencies the carrier frequency is to be switched. One typical configuration for such switching is that the carrier frequency set by the controller 20 is increased in accordance with an increase in the actual rotation speed or in accordance with an increase in the input power.

Thus, according to the configuration in which a plurality of carrier frequencies are set and switching between the plurality of carrier frequencies is performed based on either the rotation speed or the input power, or based on both the rotation speed and the input power, driving of the compressor 30 (the electric motor) by steady-state rotation and driving of the compressor 30 (the electric motor) by higher-speed rotation can be achieved by performing switching using these plurality of carrier frequencies. In addition, even when the carrier frequency is switched, the generation of noise or vibration in the compressor 30, or the generation of an excessive electric current to the compressor driving device (the inverter 1), can be effectively avoided or suppressed. This makes it possible to favorably achieve both reduction of power loss during steady-state rotation and control stability during higher-speed rotation.

In the compressor driving device according to the present embodiment, the inverter circuit 10 may be configured to include the temperature sensor 13 as shown in FIG. 1. In this configuration, in a case where the temperature sensor 13 detects that the temperature of a drive element included in the inverter circuit 10 has become a setting temperature or higher, the controller 20 performs control to prevent the carrier frequency set thereby from becoming higher than the current value thereof.

Accordingly, for example, in a case where the rated temperature of the drive element is set as the setting temperature, an increase in the temperature of the drive element due to an increase in the carrier frequency can be suppressed to fall within the rated temperature of the drive element. This makes it possible to favorably suppress, for example, performance deterioration and destruction of the drive element in the inverter circuit 10.

### (Other Embodiments or Variations)

The above-described embodiment has been given as an example of the technology disclosed in the present application. However, the technology according to the present disclosure is not limited to this embodiment, but is applicable to other embodiments that are obtained by making modifications, replacements, additions, omissions, etc., to the above-described embodiment. That is, the present disclosure encompasses the above-described variations of the embodiment. Further, a new embodiment of the technology according to the present disclosure can be realized by combining multiple components described in the above embodiment.

Specifically, for example, in the above-described embodiment, the circuit current detected by the current detection circuit 12 is used to estimate the position of the bottom dead center of the piston 34. However, the position of the bottom dead center is estimated not only based on the circuit current detection by the current detection circuit 12. Alternatively, for example, the position of the bottom dead center of the piston 34 may be estimated by using a built-in sensor of the brushless DC motor 31, such as a Hall element. Further alternatively, the position of the bottom dead center or the top dead center of the piston 34 may be estimated based on the rotation speed of the rotor of the brushless DC motor 31.

In the above-described embodiment, to generate a PWM signal, it is necessary to periodically obtain an electric current value from the compressor 30 by the current detection circuit 12, and the sampling interval for obtaining the electric current value is synchronized with the carrier frequency. However, the number of times the electric current value is obtained is not limited to once in synchronization with the carrier frequency, but may be multiple times. Further, the sampling interval may be configured to be asynchronous with the PWM signal.

In the above-described embodiment, the current detection circuit 12 is configured as a single-shunt circuit that detects a circuit current from a DC section of the inverter circuit 10. However, the detection of the circuit current is not limited to this configuration. For example, a three-shunt circuit that detects electric currents of the respective three phases of the inverter circuit 10 may be used.

In the above-described embodiment, the timing to switch the carrier frequency is the bottom dead center of the piston 34. However, the position of the bottom dead center is a target value, and variations may occur depending on various conditions such as control accuracy and various tolerances. Therefore, the timing to switch the carrier frequency is not limited to the bottom dead center of the piston 34. For example, with reference to the bottom dead center, a position (an estimated position) at which a load torque variation is smaller than that at the top dead center may be used as the switching timing.

### (Additional Remarks)

Based on the above descriptions of the embodiment, the present specification discloses the techniques indicated below.

### (Technique 1)

A compressor driving device including: an inverter including an inverter circuit that converts a direct current into an alternating current and a controller; and a compressor including an electric motor connected to the inverter circuit and a piston moved within a cylinder in a reciprocating manner by the electric motor, wherein the controller includes: a multi-phase PWM signal generator configured to set a plurality of carrier frequencies for driving the compressor; and a bottom dead center detector configured to detect a bottom dead center of the piston in the compressor, and in a case where the controller switches a carrier frequency from a high frequency to a low frequency while the compressor is rotating, a timing to switch the carrier frequency is the bottom dead center of the compressor.

### (Technique 2)

The compressor driving device according to technique 1, wherein during startup of the compressor, the controller sets the carrier frequency during acceleration of the compressor to be higher than the carrier frequency during steady-state driving after the acceleration has ended.

### (Technique 3)

The compressor driving device according to technique 1 or 2, wherein after startup of the compressor, the controller performs rotation speed control of the compressor by switching the carrier frequency between at least two carrier frequencies.

### (Technique 4)

The compressor driving device according to any one of techniques 1 to 3, wherein the controller determines, based on at least one of an actual rotation speed of the compressor or input power to the inverter, to which one of two or more carrier frequencies the carrier frequency is to be switched.

### (Technique 5)

The compressor driving device according to technique 4, wherein the controller increases the carrier frequency set thereby in accordance with an increase in the actual rotation speed or in accordance with an increase in the input power to the inverter.

### (Technique 6)

The compressor driving device according to any one of techniques 1 to 5, wherein the inverter circuit includes a temperature sensor, and in a case where the temperature sensor detects that a temperature of a drive element included in the inverter circuit has become a setting temperature or higher, the controller prevents the carrier frequency set thereby from becoming higher than a current value thereof.

It should be noted that the present disclosure is not limited to the above-described embodiment. Various modifications can be made to the present disclosure within the scope of the claims for patent. Embodiments obtained by suitably combining technical means that are disclosed in different embodiments and variations also fall within the technical scope of the present disclosure.

From the foregoing description, numerous modifications and other embodiments of the present invention are obvious to those skilled in the art. Accordingly, the description is to be construed as illustrative only, and is provided for the purpose of teaching those skilled in the art the best mode of carrying out the invention. The structural and/or functional details may be substantially modified without departing from the scope of the present disclosure.

### Industrial Applicability

The present disclosure is widely and suitably applicable in the field of driving compressors used in various refrigerator-freezer equipment. In particular, the present disclosure is suitably used in the field of compressor driving devices included in refrigerator-freezer equipment, such as refrigerators and air conditioners.

### Reference Signs List

- 1:: inverter
- 10: inverter circuit
- 11:: drive circuit
- 12:: current detection circuit
- 13:: temperature sensor
- 20:: controller
- 21:: arithmetic processor
- 22:: carrier frequency setter
- 23:: PWM signal generator
- 24:: bottom dead center detector
- 30:: compressor
- 31:: brushless DC motor (electric motor)
- 32:: DC voltage source
- 33:: crank mechanism
- 34:: piston
- 35:: cylinder

## Claims

1. A compressor driving device comprising:
an inverter including an inverter circuit that converts a direct current into an alternating current and a controller; and
a compressor including an electric motor connected to the inverter circuit and a piston moved within a cylinder in a reciprocating manner by the electric motor, wherein
the controller includes:
a multi-phase PWM signal generator configured to set a plurality of carrier frequencies for driving the compressor; and
a bottom dead center detector configured to detect a bottom dead center of the piston in the compressor, and
in a case where the controller switches a carrier frequency from a high frequency to a low frequency while the compressor is rotating, a timing to switch the carrier frequency is the bottom dead center of the compressor.

2. The compressor driving device according to claim 1, wherein
during startup of the compressor, the controller sets the carrier frequency during acceleration of the compressor to be higher than the carrier frequency during steady-state driving after the acceleration has ended.

3. The compressor driving device according to claim 1, wherein
after startup of the compressor, the controller performs rotation speed control of the compressor by switching the carrier frequency between at least two carrier frequencies.

4. The compressor driving device according to claim 1, wherein
the controller determines, based on at least one of an actual rotation speed of the compressor or input power to the inverter, to which one of two or more carrier frequencies the carrier frequency is to be switched.

5. The compressor driving device according to claim 4, wherein
the controller increases the carrier frequency set thereby in accordance with an increase in the actual rotation speed or in accordance with an increase in the input power to the inverter.

6. The compressor driving device according to any one of claims 1 to 5, wherein
the inverter circuit includes a temperature sensor, and
in a case where the temperature sensor detects that a temperature of a drive element included in the inverter circuit has become a setting temperature or higher, the controller prevents the carrier frequency set thereby from becoming higher than a current value thereof.
